# FASCICULE DE BREVET EUROPEEN

(11) **EP 0 776 809 B1**
(45) Date de publication et mention de la délivrance du brevet: **25.06.1997**
(21) Numéro de dépôt: 96440001.4
(22) Date de dépôt: 05.01.1996
(51) Int. Cl.: B62B 1/18

(54) **Brouettes et chariots de manutention**
Schubkarre und Lastförderwagen
Wheelbarrow and load-handling trolley

(30) Priorité: 22.05.1995 FR 9506276
(43) Date de publication de la demande: 04.06.1997
(73) Titulaire: HAEMMERLIN S.A., F-67700 Monswiller (FR)
(72) Inventeur: Haemmerlin, Bernard, F-67700 Monswiller (FR)
(74) Mandataire: Littolff, Denis

(56) Documents cités:
- FR-A- 966 856
- FR-A- 1 281 947
- GB-A- 426 986
- GB-A- 2 156 288
- US-A- 2 176 780

## Description

La présente invention concerne les brouettes et chariots de manutention analogues comportant une roue unique située à l'avant d'un châssis supportant une cuve. Elle vise plus particulièrement les chariots de ce genre dits "à suspension", dans lesquels est prévu un moyen élastique permettant à ladite roue de se soulever aisément pour franchir les obstacles qu'elle rencontre.

De tels chariots "à suspension" sont connus depuis le début du siècle, puisqu'on en trouve mention dès 1914 dans le catalogue de la société allemande H. KÖTTGEN u. Cie. Depuis lors, de nombreuses réalisations en ont été proposées, par exemple dans les brevets français N° 2 613 308 et N° 2 692 218.

Toutefois, il convient de noter que dans toutes les réalisations antérieures, la roue est située sensiblement en avant par rapport au moyen élastique mis en oeuvre, dont le point fixe est à l'inverse situé sensiblement à l'arrière du chariot.

Il en résulte que, au contact d'un obstacle, l'axe de la roue tend à décrire un arc de cercle vers le haut, dont le centre est situé vers l'arrière du chariot, c'est à dire dont la concavité est tournée vers l'arrière. Ce déplacement a pour conséquence que la roue ellemême, au lieu de rouler le long de l'obstacle pour le surmonter, s'en écarte dans une trajectoire conforme audit arc de cercle.

L'invention vise une réalisation dans laquelle ledit arc de cercle a son centre vers l'avant de la brouette comme dans la brevet britannique GB-A-2 156 288, en avant de la roue ellemême qui, au contact de l'obstacle, roue verticalement le long de cet obstacle en tendant à le contourner par dessus et vers l'avant, ce qui représente un mode d'amortissement beaucoup plus doux et régulier.

Plus particulièrement, dans une brouette ou dispositif de manutention analogue comportant un châssis reposant vers sa partie avant sur une roue pivotant autour d'un premier axe horizontal, du type dans lequel ledit premier axe horizontal est luimême porté par une pièce rigide montée basculante autour d'un second axe horizontal parallèle au premier, fixé audit châssis vers l'avant par rapport audit premier axe horizontal, et dans lequel ladite pièce rigide comporte deux bras sensiblement parallèles réunis à leur partie arrière par ledit premier axe horizontal et comportant vers leur extrémité avant des moyens élastiques coopérant avec la partie avant du châssis en vue d'amortir les mouvements de basculement qu'elle prend au franchissement d'obstacles par la roue, l'invention consiste essentiellement en ce que ledit second axe horizontal est situé entre le premier axe horizontal et ladite extrémité avant, en un point intermédiaire situé sur la longueur desdits bras de manière telle que la distance entre le premier et le second axe soit très supérieure à la distance entre le second axe et ladite extrémité avant, ladite pièce rigide constituant ainsi un levier du premier genre transmettant, en en réduisant l'amplitude d'un facteur égal au rapport entre lesdites distances respectives, lesdits mouvements de basculement, lesdits moyens élastiques étant du type à compression, interposés entre les extrémités avant de la pièce rigide et du châssis et soumis ainsi auxdits mouvements d'amplitude réduite de celle-ci, en jouant ainsi la fonction de rappel dynamique dans la suspension.

L'invention vise un certain nombre de modes de réalisation, dans tous lesquels lesdites forces élastiques résultent de l'énergie potentielle de détente accumulée par ledit élément au cours de sa déformation sous l'action de ladite composante verticale.

Selon une réalisation, ledit élément est une pièce rigide pivotante soumise à un ressort et lesdites forces de rappel élastiques résultent de l'action de compression de ce ressort par ladite pièce.

Dans ce cas, de préférence, ladite pièce rigide a la forme d'un étrier monté basculant autour d'au moins un axe porté par la portion avant du châssis de la brouette, et ouvert vers l'arrière, les extrémités arrières des branches de cet étrier portant l'axe de la roue, et la portion avant de cet étrier comportant une butée venant comprimer un élément élastique tel qu'un ressort ou un bloc de matériau élastomère.

Dans ce cas également, plusieurs variantes sont possibles selon la structure du châssis porteur de la brouette.

Ainsi, selon une première variante, la portion du châssis de la brouette située en avant dudit axe ayant la forme d'un arceau sensiblement horizontal réunissant les deux longerons latéraux dudit châssis pour former un butoir, ledit élément élastique est placé sur ce butoir, une plaquette située à l'avant dudit étrier étant située sur ledit élément élastique.

Selon une seconde variante, le châssis de la brouette ne comportant que deux longerons latéraux, non réunis par un butoir, ledit étrier est également ouvert à sa partie avant, les extrémités avant de ses deux branches comportent chacune une plaquette venant se placer chacune sur l'un des deux éléments élastiques placés chacun vers l'extrémité avant de l'un desdits longerons latéraux.

Pour assurer le maximum de douceur à la suspension et à l'amortissement, il est recommandé que le point de basculement de l'étrier sur le châssis de la brouette soit situé de telle manière que la distance de ce point à l'axe de la roue est sensiblement supérieure à sa distance à ladite butée.

On va maintenant décrire l'invention en se référant à un mode de réalisation préféré, grâce aux dessins annexés sur lesquels :
- Les figures 1A et 1B illustrent schématiquement le comportement de la roue d'une brouette au contact d'un obstacle, dans le cas d'une roue montée sur un équipage élastique conforme respectivement aux techniques antérieures et selon l'invention.
- La figure 2 est une vue en perspective du mode de réalisation préféré de l'invention ; et
- La figure 3 est une vue agrandie de l'équipage élastique utilisé dans le mode de réalisation de la figure 2.

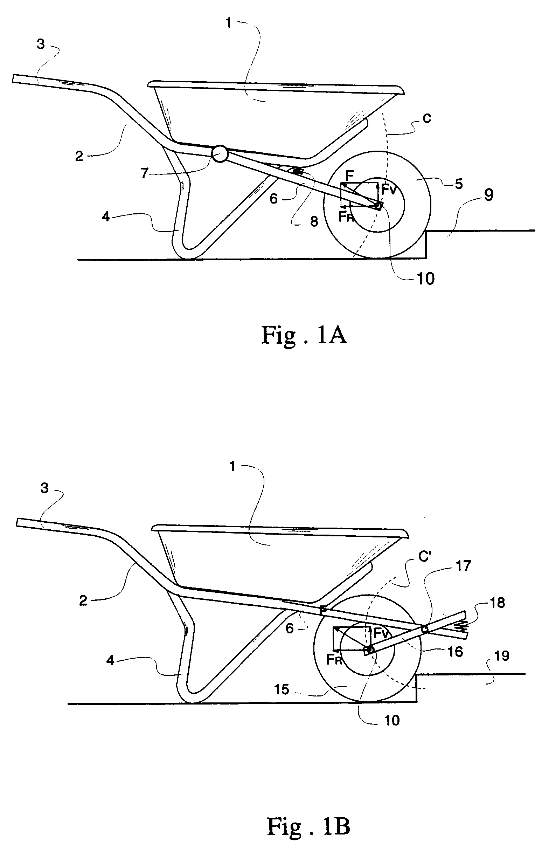

Si l'on se reporte tout d'abord aux figures 1A et 1B, on y a représenté symboliquement de profil une brouette se composant d'une cuve 1, montée sur un châssis 2 comportant des bras 3, et reposant d'une part sur un pied arrière fixe 4, et d'autre part sur une roue 5 portée par l'avant du châssis 2.

Dans les brouettes à suspension élastique de l'art antérieur, ladite roue 5 était montée à l'extrémité avant d'un équipage élastique 6, dont le point de flexion 7 était situé très en arrière de la roue 5. Par exemple, dans l'exemple de la figure 1A, l'équipage élastique est une fourche articulée en 7 au-dessous du châssis 2, et pouvant se soulever en opposition à un ressort 8, les éléments 6, 7, 8 étant tous situés derrière la roue 5. Il en résultait qu'au contact d'un obstacle tel qu'une marche 9, la force de réaction F se décomposait en une composante horizontale dirigée vers l'arrière F_{R} et une composante verticale Fᵥ dirigée vers le haut, de sorte que l'axe 10 de la roue tendait à se déplacer suivant un arc de cercle C de centre 7, donc dont la concavité était tournée vers l'arrière. L'effort de poussée sur la brouette pour franchir l'obstacle tendait donc à faire reculer la roue, ce qui venait en contradiction avec le but recherché.

Au contraire, selon l'invention, l'équipage élastique, constitué par la fourche 16, portant la roue 15 et l'élément élastique 18, est articulée en 17 au châssis 2 en un point situé en avant de la roue 15, le ressort (ou élément élastique analogue) 18 étant situé encore plus en avant, au-delà du point d'articulation 17. Il en résulte que, sous l'effet d'une poussée contre un obstacle 19, l'axe 10 de la roue 15 va, comme dans le cas précédent, parcourir un arc de cercle C' dont, par contre, la concavité étant tournée vers le centre de rotation 17, sera tournée vers l'avant, de sorte que la roue 15 tendra à contourner l'obstacle 19 par le dessus, avec une diminution sensible de l'effort nécessaire par rapport non seulement aux systèmes dont l'équipage n'est pas élastique, mais encore aux systèmes à équipage élastique de l'art antérieur.

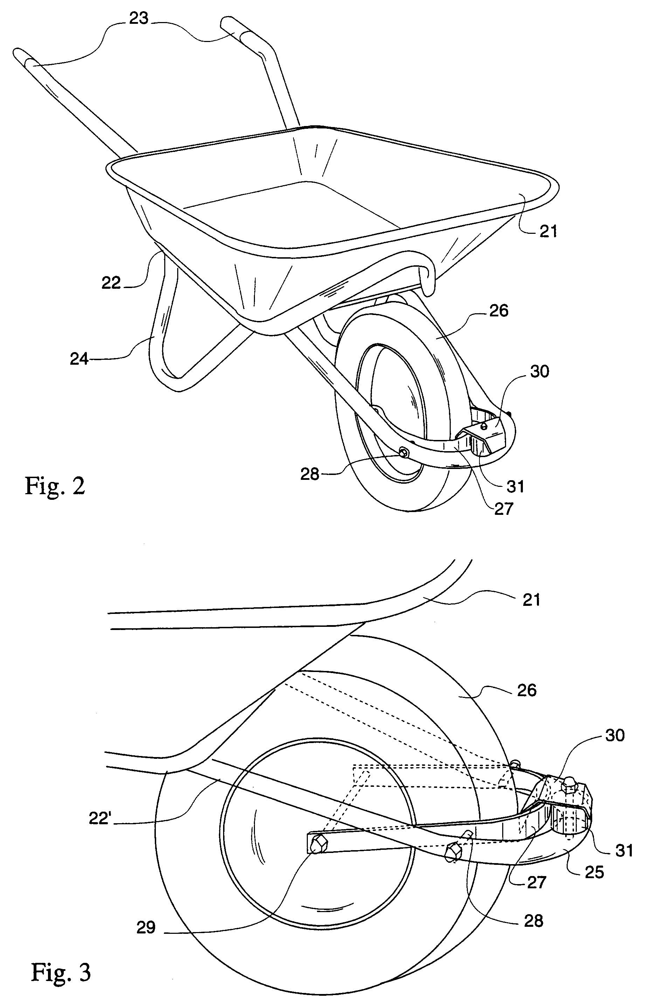

Cette représentation symbolique est concrétisée dans la brouette illustrée aux figures 2 et 3.

Sur ce dessin, on a désigné par 21 la cuve de la brouette, portée par un châssis 22 comportant des bras 23, des pieds fixes 24 et une fourche avant 25, sur laquelle est monté un équipage élastique portant la roue 26. Cet équipage se compose d'un étrier 27 monté basculant sur un axe 28 monté transversalement à la fourche 25, l'axe 29 de la roue 26 étant porté par les extrémités arrières des bras de l'étrier 27, tandis que la portion avant dudit étrier comporte une butée 30 venant comprimer un élément élastique ayant, dans le cas représenté, la forme d'un bloc d'élastomère 31.

Comme il apparaît notamment sur la figure 3, le point de basculement 28 de l'étrier 27 est situé tout à fait à l'avant des longerons longitudinaux 22' du châssis 22, tandis que l'axe 29 de la roue 26 est situé en un point de l'étrier 27 relativement très éloigné vers l'arrière de l'axe 28, et que la butée 30 située à l'avant de l'étrier 27 est relativement beaucoup plus près vers l'avant de l'axe 28. Il en résulte un effet de lever très important, assurant, à la suspension de la brouette et à l'amortissement des chocs et vibrations à la rencontre d'obstacles, le maximum de douceur.

Dans le cas où les longerons longitudinaux 22' ne sont pas refermés en arceau comme en 25, mais sont ouverts à l'extrémité avant de la brouette, l'étrier 27 peut, dans le cadre de l'invention, être également ouvert, les extrémités avant de chacune de ses fourches comportant alors chacune une butée analogue à 30, venant comprimer un élément élastique analogue à 31, porté par l'extrémité avant de chaque longeron 22'.

Comme élément élastique 31, on peut utiliser un bloc d'élastomère présentant le coefficient d'élasticité approprié au degré d'amortissement souhaité. On peut également utiliser un ressort de compression, exerçant le même effet.

## Revendications

1. Brouette (1) ou dispositif de manutention analogue comportant un châssis (2) reposant vers sa partie avant sur une roue pivotant (15) autour d'un premier axe horizontal (10), du type dans ledit premier axe horizontal (10) est luimême porte par une pièce rigide (16) montée basculante autour d'un second axe (17) horizontal parallèle au premier, fixé audit châssis vers l'avant par rapport audit premier axe horizontal (10), et dans lequel ladite pièce rigide (16) comporte deux bras sensiblement parallèles réunis à leur partie arrière par ledit premier axe horizontal (10) et comportant vers leur extrémité avant des moyens élastiques (31) coopérant avec la partie avant du châssis en vue d'amortir les mouvements de basculement qu'elle prend au franchissement d'obstacles par la roue (15),
caractérisée en ce que
ledit second axe horizontal (17) est situé entre le premier axe horizontal (10) et ladite extrémité avant (25), en un point intermédiaire situé sur la longueur desdits bras de manière telle que la distance entre le premier (10) et le second axe (17) soit très supérieure à la distance entre le second axe (17) et ladite extrémité avant (25), ladite pièce rigide (16) constituant ainsi un levier du premier genre transmettant, en en réduisant l'amplitude d'un facteur égal au rapport entre lesdites distances respectives, lesdits mouvements de basculement, lesdits moyens élastiques (31) étant du type à compression, interposés entre les extrémités avant de la pièce rigide (16) et du châssis (2) et soumis ainsi auxdits mouvements d'amplitude réduite de celle-ci, en jouant ainsi la fonction de rappel dynamique dans la suspension.

2. Brouette selon la revendication 1, caractérisée en ce que, la portion du châssis ayant la forme d'un arceau (25) reunissant vers leurs extrémités avant les longerons longitudinaux dudit châssis, en formant un butoir pour la brouette, ladite pièce rigide (16) a la forme d'un étrier dont le fond réunit lesdits bras, les moyens élastiques (31) étant interposés entre ledit fond et ledit arceau.

3. Brouette selon la revendication 1, caractérisée en ce que, les longerons latéraux dudit châssis (2) sont séparés à leurs extrémités avant, les bras de la pièce rigide (16) étant écartés de façon correspondante à leurs extrémités avant, les moyens élastiques étant interposés entre les extrémités avant respectives des longerons et desdits bras.

## Claims

1. Wheelbarrow (1) or similar handling device having a chassis (2) resting towards its front part on a wheel (15) pivoting about a first horizontal shaft (10), of the type in which the said first horizontal shaft (10) is itself carried by a rigid piece (16) mounted so as to tilt about a second horizontal shaft (17) parallel to the first, fixed to the said chassis towards the front with respect to the said first horizontal shaft (10), and in which the said rigid piece (16) has two substantially parallel arms connected at their rear part by the said first horizontal shaft (10) and having towards their front end elastic means (31) cooperating with the front part of the chassis with a view to damping the tilting movements which it adopts when obstacles are passed over by the wheel (15),
characterised in that
the said second horizontal shaft (17) is situated between the first horizontal shaft (10) and the said front end (25) and an intermediate point situated on the length of the said arms so that the distance between the first (10) and the second (17) shaft is very much greater than the distance between the second shaft (17) and the said front end (25), the said rigid piece (16) thus constituting a lever of the first kind transmitting, whilst reducing the magnitude thereof, a factor equal to the ratio between the respective said distances, the said tilting movements, the said elastic means (31) being of the compression type, interposed between the front ends of the rigid piece (16) and of the chassis (2) and thus subjected to the said reduced-magnitude movements thereof, thus fulfilling the dynamic return function in the suspension.

2. Wheelbarrow according to Claim 1, characterised in that, the portion of the chassis having the shape of an arch (25) connecting the longitudinal frame members of the said chassis towards their front ends, forming a bumper for the wheelbarrow, the said rigid piece (16) has the shape of a yoke, the base of which connects the said arms, the elastic means (31) being interposed between the said base and the said arch.

3. Wheelbarrow according to Claim 1, characterised in that the lateral frame members of the chassis (2) are separated at their front ends, the arms of the rigid piece (16) being correspondingly separated at their front ends, the elastic means being interposed between the respective front ends of the frame members and the said arms.

## Patentansprüche

1. Schubkarren (1) oder Vorrichtung mit analoger Handhabung, mit einem Rahmen (2), der in der Nähe seines vorderen Teils auf einem um eine erste horizontale Achse (10) drehbaren Rad (15) aufliegt, wobei der Schubkarren von den Typ ist, bei dem diese erste horizontale Achse (10) ihrerseits von einem starren Teil (16) getragen wird, das an einer zur ersten Achse parallelen zweiten horizontalen Achse (17) angelenkt und am Rahmen vor der ersten horizontalen Achse (10) befestigt ist, und bei dem das starre Teil (16) zwei im wesentlichen parallele Arme umfaßt, die in ihrem hinteren Teil durch die erste horizontale Achse (10) miteinander verbunden sind und an ihrem vorderen Ende elastische Mittel (31) aufweisen, die mit dem vorderen Teil des Rahmens in der Weise zusammenwirken, daß die Schwenkbewegungen, die er beim Überfahren von Hindernissen mit dem Rad (15) ausführt, gedämpft werden,
dadurch gekennzeichnet, daß
die zweite horizontale Achse (17) zwischen der ersten horizontalen Achse (10) und dem vorderen Ende (25) an einem Punkt längs der Arme angeordnet ist, derart, daß der Abstand zwischen der ersten Achse (10) und der zweiten Achse (17) viel größer als der Abstand zwischen der zweiten Achse (17) und dem vorderen Ende (18) ist, wobei das starre Teil (16) somit einen Hebel der ersten Art bildet, der die Schwenkbewegungen unter Reduzierung der Amplitude um einen Faktor, der gleich dem Verhältnis zwischen den Abständen ist, überträgt, wobei die elastischen Mittel (31) vom Kompressionstyp sind, zwischen die vorderen Enden des starren Teils (16) und des Rahmens (2) eingesetzt sind und somit deren Bewegungen mit reduzierter Amplitude unterliegen und dabei somit die dynamische Rückstellfunktion in der Aufhängung bewirken.

2. Schubkarren nach Anspruch 1, dadurch gekennzeichnet, daß das starre Teil (16) dann, wenn der die Form eines Bogens (25) besitzende Rahmenabschnitt die Längsträger des Rahmens in der Nähe ihrer vorderen Enden miteinander vereinigt und dadurch einen Anschlag für den Schubkarren bildet, die Form eines Bügels besitzt, dessen Grundlinie die Arme miteinander verbindet, wobei die elastischen Mittel (31) zwischen der Grundlinie und dem Bogen eingesetzt sind.

3. Schubkarren nach Anspruch 1, dadurch gekennzeichnet, daß die Seitenträger des Rahmens (2) an ihren vorderen Enden voneinander getrennt sind, wobei die Arme des starren Teils (16) an ihren vorderen Enden in entsprechender Weise beabstandet sind, wobei die elastischen Mittel zwischen die entsprechenden vorderen Enden der Träger bzw. der Arme eingesetzt sind.
